# EUROPEAN PATENT APPLICATION

(11) **EP 4 718 574 A2**
(43) Date of publication of application: **01.04.2026**
(21) Application number: 26150222.3
(22) Date of filing: 15.12.2022
(51) Int. Cl.: H01M 10/42

(54) **BATTERY PACK WITH IMPROVED SAFETY**

(30) Priority: 27.12.2021 KR 20210188506; 07.12.2022 KR 20220169562
(62) Divisional of application: 22916565.9
(71) Applicant: LG Energy Solution, Ltd., Seoul 07335 (KR)
(72) Inventor: AHN, Jong Kyu, 34122 Daejeon (KR); MOON, Jeong Oh, 34122 Daejeon (KR); LEE, Jaeki, 34122 Daejeon (KR); KIM, Kiyoun, 34122 Daejeon (KR); KIM, Hyeon Kyu, 34122 Daejeon (KR); PARK, Gidong, 34122 Daejeon (KR); LEE, Seongju, 34122 Daejeon (KR); YUN, Youngwon, 34122 Daejeon (KR)
(74) Representative: Plasseraud IP

(57) **Abstract**

A battery pack according to one embodiment of the present disclosure includes a cell module assembly including a battery cell stack in which a plurality of battery cells are stacked and each battery cell is erected in a vertical direction; a plate-shaped blocking members disposed between adjacent battery cells and erected in a vertical direction; a pack case configured so as to house the cell module assembly and opened at its upper surface; and a fire-fighting tank located above the cell module assembly and covering an upper surface of the pack case, wherein the blocking member includes a plurality of openings at its upper end, and an inside of the blocking member includes an empty space connected to the plurality of openings.

## Description

### [TECHNICAL FIELD]

### Cross Citation with Related Application(s)

This application items the benefit of Korean Patent Application No. 10-2021-0188506 filed on December 27, 2021 and Korean Patent Application No. 10-2022-0169562 filed on December 7, 2022 in the Korean Intellectual Property Office, the entire contents of which are incorporated herein by reference.

The present disclosure relates to a battery, and more particularly, to a battery pack or the like configured to ensure safety even when a thermal event occurs.

### [BACKGROUND]

Currently broadly used secondary batteries include a nickel cadmium battery, a nickel hydrogen battery, a nickel zinc battery, a lithium secondary battery, and the like. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses a lithium-based oxide and a carbonaceous material as a positive electrode active material and a negative electrode active material, respectively. The lithium secondary battery comprises an electrode assembly in which a positive electrode plate and a negative electrode plate, each being coated with the positive electrode active material and the negative electrode active material, are arranged with a separator being interposed between them, and an exterior material, i.e., battery case, which seals and houses the electrode assembly together with an electrolyte solution.

Generally, the lithium secondary battery may be classified into a can-type secondary battery in which the electrode assembly is mounted in a metal can, and a pouch-type secondary battery in which the electrode assembly is mounted in a pouch of an aluminum laminate sheet, depending on the shape of the exterior material.

Such secondary batteries are widely used not only in small-sized devices such as a portable electronic device, but also in medium- and large-sized devices such as an electric vehicle and an energy storage system (ESS), and the degree to which they are used is increasing rapidly. Moreover, in recent years, there has been an increasing tendency to use home battery packs as an application for storing electric power.

Various battery packs, including home battery packs, include a plurality of battery cells (secondary batteries) to increase capacity and/or output. In particular, in order to increase the energy density of a battery pack, a plurality of battery cells are often disposed densely in a very narrow space.

In such a battery pack configuration, one of the typically important issues is safety. In particular, when a thermal event occurs in any one of the plurality of battery cells included in the battery pack, such events need to be suppressed from propagating to other battery cells. If the thermal propagation between battery cells is not properly suppressed, this causes a thermal event in several battery cells included in the battery pack, which may cause bigger problems such as ignition or explosion of the battery pack. Moreover, a fire or explosion generated in a battery pack may cause great damage to human life or property in the periphery. In particular, in the case of a home battery pack, if ignition or explosion occurs, it can impair the safety of people living in the house, and spread into a house fire to cause more damage.

### [DETAILED DESCRIPTION OF THE INVENTION]

### [Technical Problem]

Therefore, the present disclosure has been designed to solve the above-mentioned problems, and therefore, an object of the present disclosure is to provide a battery pack or the like whose structure is improved so as to suppress transitions between cells when a thermal event occurs inside the battery pack.

However, the technical problem to be solved by the embodiments of the present disclosure is not limited to the above-described problems, and additional other problems not mentioned above will be clearly understood from the description of the appended items by those skilled in the art.

### [Technical Solution]

In order to achieve the above objects, according to one aspect of the present disclosure, there is provided a battery pack comprising: a plurality of battery cells; a blocking member configured to be interposed between adjacent battery cells to block heat; a pack case that houses the plurality of battery cells and the blocking member in an inner space; and a fire-fighting tank that stores a fire extinguishing agent and disposed on an upper part of the cell assembly.

Wherein, the blocking member may be configured in a form in which a heat insulating material is interposed between metal plates.

The metal plate may be made of an aluminum material.

The heat insulating material may be a mica sheet or a compressed paper.

The fire-fighting tank may be configured to discharge the fire extinguishing agent toward the cell assembly when heat is applied from the cell assembly.

The blocking member may be configured to allow the fire extinguishing agent discharged from the fire-fighting tank to flow thereinto.

According to another aspect of the present disclosure, there is provided an energy storage system comprising the battery pack according to the present disclosure.

According to one embodiment of the present disclosure, there is provided a battery pack comprising: a cell module assembly including a battery cell stack in which a plurality of battery cells are stacked and each battery cell is erected in a vertical direction; a plate-shaped blocking members disposed between adjacent battery cells and erected in a vertical direction; a pack case housing the cell module assembly, an upper surface of the pack case being opened; and a fire-fighting tank located above the cell module assembly and covering the upper surface of the pack case, wherein the blocking member includes a plurality of openings at its upper end, and an inside of the blocking member includes an empty space connected to the plurality of openings.

When a thermal event occurs in the battery cell, a fire extinguishing agent provided from the fire-fighting tank may flow into the empty space inside the blocking member through the plurality of openings of the blocking member.

The blocking member may comprise a support plate and a pair of swelling pads provided on both surfaces of the support plate.

The support plate comprises a plurality of first through holes that are formed by penetrating the support plate in one direction from the plurality of openings, and an inside of the plurality of first through holes may be the empty space inside the blocking member.

The first through hole may extend in the vertical direction of the support plate, the plurality of first through holes being arranged in a line in parallel to each other.

Lower ends of the plurality of first through holes may be opened at lower ends of the support plate, and the lower end of the support plate being disposed so as to be closely contacted or adhered to the lower surface of the pack case, or the lower ends of the plurality of first through holes have a clogged shape, so that a fire extinguishing agent stays inside the plurality of first through holes.

The support plate further comprises a plurality of second through holes, the plurality of first through holes and the plurality of second through holes extend in mutually different directions and intersect each other, and an inside of the plurality of first through holes and the plurality of second through holes may be the empty space inside the blocking member.

Both ends of the plurality of second through holes may each have a clogged shape.

The first through hole may extend in the vertical direction of the support plate, the plurality of first through holes being arranged in a line in parallel to each other, and the second through hole may extend in the longitudinal direction of the support plate, the plurality of second through holes being arranged in a line in parallel to each other.

The support plate is made of metal or stainless steel, and the swelling pad may be made of a silicone material or a soft plastic material.

The support plate may be formed by coupling a pair of support plate members that are bilaterally symmetrically formed at a cross section in a longitudinal direction of the support plate.

The support plate may be integrally formed.

The fire extinguishing agent may be a liquid fire extinguishing agent.

The fire-fighting tank may comprise an internal space that houses the fire extinguishing agent; and a plurality of fragile parts where the thickness of a base plate of the fire-fighting tank is relatively thin, so as to be melted and opened by a thermal event of the battery cell.

The fragile parts have a linear shape and are arranged in parallel with one edge of the fire-fighting tank, the fragile parts being arranged in parallel with each other, and a longitudinal direction of the fragile part and a longitudinal direction of the battery cell may be orthogonal to each other.

The cell module assembly may comprise a pair of busbar housings disposed on the front and rear surfaces of the battery cell stack; and a pair of end plates disposed in parallel to the battery cells at both side end parts of the battery cell stack, wherein a pair of end plates may be connected between the pair of busbar housings.

A plurality of battery packs are provided and can be stacked in a vertical direction and are coupled to each other through mechanical or electrical connection.

In order to achieve the above objects, according to another embodiment of the present disclosure, there is provided an energy storage system comprising one or more of the battery packs according to the present disclosure.

### [Advantageous Effects]

According to one aspect of the present disclosure, a battery pack with improved safety can be provided.

In particular, according to one embodiment of the present disclosure, if a thermal event occurs inside the battery pack, the fire extinguishing agent (fire extinguishing fluid) supplied from the fire-fighting tank flows into an empty space inside the blocking member through the opening at the upper end of the blocking member and stays in the space inside the blocking member, thereby capable of effectively suppressing propagation of thermal events between cells.

Moreover, when issues such as thermal runaway or ignition occur in some of the plurality of battery cells contained in the battery pack, it can effectively prevent such issues from propagating to other battery packs.

Further, according to one aspect of the present disclosure, a battery pack having a simple structure and enhanced in thermal safety can be provided.

In particular, according to one embodiment of the present disclosure, since the addition of new parts for injecting the fire extinguishing agent is not required, a battery pack that is excellent in manufacturability and economic efficiency can be provided.

Further, according to one aspect of the present disclosure, design of a special waterproof and dustproof structure or the like is not necessary.

Further, according to one aspect of the present disclosure, the battery packs of the same type are stacked by a plurality of numbers, thereby being able to provide products having various voltage ranges and/or electric storage capacities.

In addition, several other additional effects can be achieved by various embodiments of the present disclosure. Such various effects of the present disclosure will be described in detail in each embodiment, or descriptions of effects that can be easily understood by those skilled in the art will be omitted.

### [BRIEF DESCRIPTION OF THE DRAWINGS]

The accompanying drawings illustrate preferred embodiments of the present disclosure and, together with the detailed description provided below, serve to provide further understanding of the technical spirit of the present disclosure. Thus, the present disclosure is not to be construed as being limited to those drawings.
Fig. 1 is a diagram which schematically shows a configuration of a battery pack according to one embodiment of the present disclosure;
Fig. 2 is an exploded perspective view which schematically shows a partial configuration of a battery pack according to one embodiment of the present disclosure;
Fig. 3 is a cross-sectional view of a battery pack according to one embodiment of the present disclosure;
Fig. 4 is an exploded perspective view which schematically shows the configuration of a battery pack according to another embodiment of the present disclosure;
Fig. 5 is a cross-sectional view which shows the configuration of a fire-fighting tank included in the battery pack of Fig. 4;
Fig. 6 is a top view which shows the configuration of a fire-fighting tank included in the battery pack of Fig. 4;
Figs. 7 and 8 are a perspective view and a top view which show the configuration of a cell module assembly included in the battery pack of Fig. 4;
Figs. 9 and 10 are cross-sectional views of battery packs according to other embodiments of the present disclosure;
Fig. 11 is an exploded perspective view which schematically shows the configuration of a battery pack according to yet another embodiment of the present disclosure;
Fig. 12 is a perspective view of a cell module assembly included in the battery pack of Fig. 11;
Fig. 13 is a perspective view of a blocking member included in the battery pack of Fig. 11;
Fig. 14 is an exploded perspective view of the blocking member of Fig. 13;
Fig. 15 is a top view of the blocking member of Fig. 13;
Figs. 16 and 17 each show modifications of the blocking member of Fig. 13 as other embodiments of the blocking member of Fig. 13;
Fig. 18 is a perspective view of a pack case included in the battery pack of Fig. 11;
Figs. 19 and 20 are diagrams which explain a case where the cell module assembly of Fig. 18 is housed in a pack case;
Fig. 21 is a perspective view of a fire-fighting tank included in the battery pack of Fig. 11;
Fig. 22 is a perspective cross-sectional view of the fire-fighting tank of Fig. 21;
Fig. 23 is a top sectional view of the lower coolant tank of the fire-fighting tank as viewed from above;
Fig. 24 is a perspective view of a battery pack in which all the components of the battery pack described above with reference to Figs. 11 to 23 are combined;
Fig. 25 is a perspective view which schematically shows the battery pack of Figs. 1 to 24; and
Figs. 26 and 27 are diagrams which shows an embodiment in which the pack cases shown in Fig. 25 are stacked in numbers different from each other.

### [DETAILED DESCRIPTION OF THE E MBODIMENTS]

The present disclosure will now be described in detail with reference to the accompanying drawings. Prior to description, it should be understood that terms and words used in the specification and the appended items should not be construed as having common and dictionary meanings, but should be interpreted as having meanings and concepts corresponding to technical ideas of the present disclosure in view of the principle that the inventors can properly define the concepts of the terms and words in order to appropriately describe their own disclosure in the best way.

Therefore, the description proposed herein is just a preferable embodiment for the purpose of illustration only, not intended to limit the scope of the disclosure, so it should be understood that other equivalents and modifications could be made thereto without departing from the spirit and scope of the disclosure.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity. Meanwhile, similarly to the case where it is described as being disposed "on" or "above" another part, the case where it is described as being disposed "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

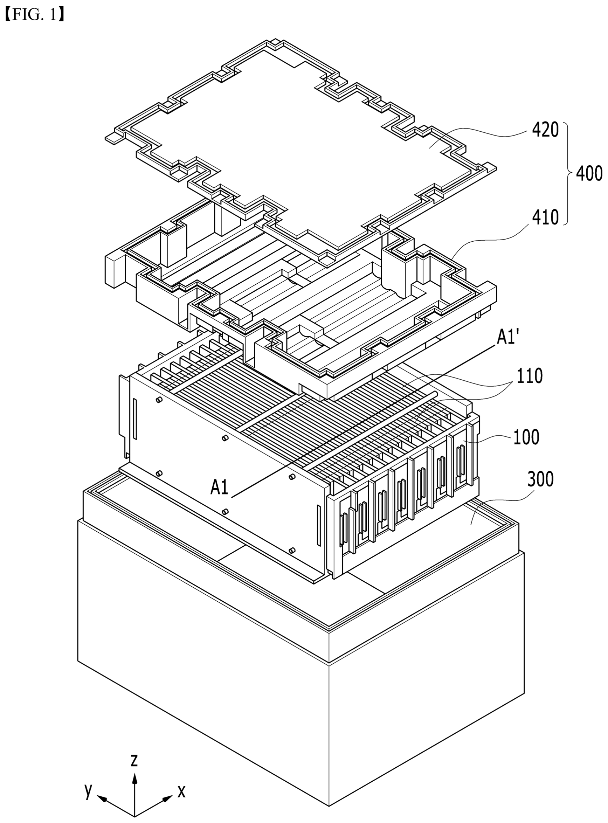

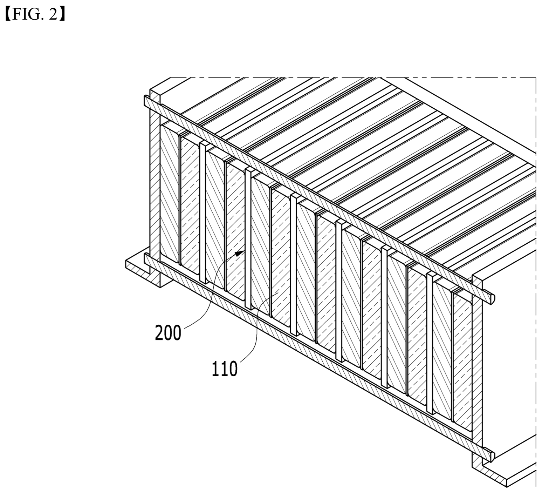

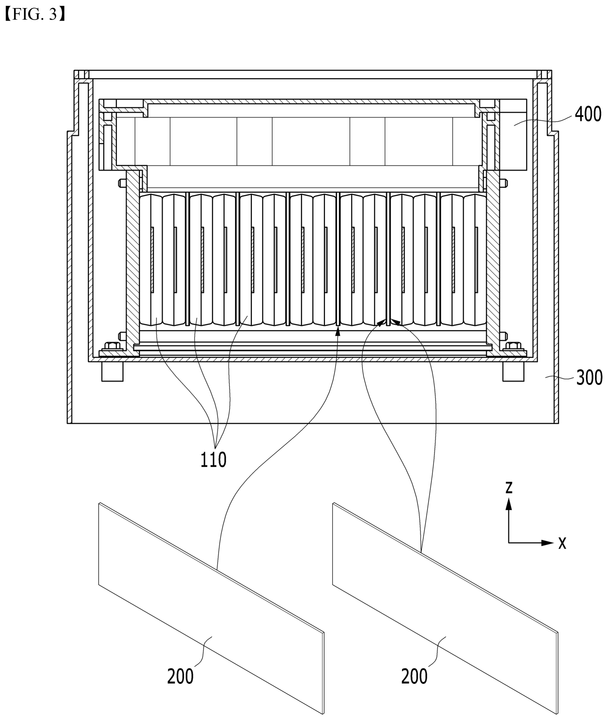

Fig. 1 is a diagram which schematically shows a configuration of a battery pack according to one embodiment of the present disclosure. Fig. 2 is an exploded perspective view which schematically shows a partial configuration of a battery pack according to one embodiment of the present disclosure. Fig. 3 is a cross-sectional view of a battery pack according to one embodiment of the present disclosure. For example, it can be said that Fig. 3 shows an example of a cross-sectional configuration taken along the line A1-A1' in a state in which the battery packs of Fig. 1 are combined.

Referring to Figs. 1 to 3, the battery pack according to the present disclosure may include a battery cell, a blocking member 200, a pack case 300 and a fire-fighting tank 400.

The battery cell 110 may mean a secondary battery. A secondary battery may include an electrode assembly, an electrolyte, and a battery case. In particular, the battery cell 110 may be a pouch type secondary battery. However, other forms of secondary batteries, such as cylindrical batteries or prismatic batteries, may also be employed as the battery cell 110. A battery pack according to the present disclosure may include a plurality of battery cells 110. The plurality of battery cells 110 may be stacked on each other in at least one direction. At this time, the plurality of battery cells 110 may be arranged side by side in a horizontal direction in a form erected in a vertical direction.

A plurality of secondary batteries may form the cell module assembly 100 in a form stacked with each other, that is, in the form of a battery cell stack. For example, the plurality of battery cells 110 may be stacked in a form arranged in a horizontal direction (X-axis direction in the figure) in a state where each is erected in a vertical direction (Z-axis direction in the figure). Each battery cell 110 may comprise electrode leads, wherein these electrode leads may be located at both end parts or at one end part of each battery cell 110. A secondary battery in which electrode leads protrude in both directions may be referred to as a bidirectional cell, and a secondary battery in which electrode leads protrude in one direction may be referred to as a unidirectional cell. In Fig. 1, a bidirectional cell is shown. However, the present disclosure is not limited by the specific type or the form of the secondary battery, and various forms of secondary batteries known at the time of filing the present disclosure may be employed in the cell module assembly 100 of the present disclosure.

The blocking member 200 may be configured to be interposed between adjacent battery cells 110 to block heat. For example, in a state in which a plurality of battery cells 110 are stacked, when a thermal event occurs in some of the battery cells 110 to generate heat or a high-temperature venting gas, the generated heat or gas may be suppressed or blocked from being transferred to an adjacent battery cell 110 by the blocking member 200. In addition, the blocking member 200 may have the role of blocking flames or sparks ejected from a specific battery cell 110.

The blocking member 200 may be configured in a substantially plate-like shape, in particular, in an erected plate-like shape. Moreover, the blocking member 200 may be configured to have a height similar to or higher than that of the battery cells 110 disposed in the horizontal direction in an erected shape. A plurality of blocking members 200 may be included in accordance with the number of battery cells 110. In addition, the blocking member 200 may constitute a cell module assembly (CMA) in a stacked form together with the battery cells 110.

According to such a configuration of embodiment of the present disclosure, in a battery pack including a plurality of battery cells 110, thermal runaway propagation between cells or the like can be effectively prevented by the blocking member 200.

The pack case 300 may be configured so as to house the plurality of battery cells 110 and the blocking member 200 in its internal space. That is, the pack case 300 has an empty space formed therein and can house the cell module assembly, which is a laminate of the battery cells 110 and the blocking member 200. The pack case 300 may be configured in a box shape having an opened upper end, but may be configured in various other shapes. In addition, the pack case 300 may further include an upper coolant tank cover coupled to the upper end opening. The box-shaped pack case 300 may be integrally molded, or may be manufactured in such a way that at least one surface couples with an adjacent surface.

The fire-fighting tank 400 may store a fire extinguishing agent. In particular, the fire-fighting tank 400 may have an internal space and store a fire extinguishing agent in the internal space. For example, the fire-fighting tank 400 may include a lower coolant tank as a coolant tank and an upper coolant tank cover as a coolant tank cover as shown in Fig. 1. Here, the coolant tank is configured in a box shape having an opened upper part, and can provide a space capable of storing the fire extinguishing agent. And, the coolant tank cover may be configured to cover the upper open part of the coolant tank and seal the fire extinguishing agent storing space of the coolant tank.

The fire-fighting tank 400 may be housed inside the pack case 300. In particular, the fire-fighting tank 400 may be disposed on the upper side of the cell module assembly in the inner space of the pack case 300.

According to such a configuration of embodiment of the present disclosure, the fire extinguishing agent is discharged from the fire-fighting tank 400 located on the upper side of the cell module assembly, so that thermal events of the cell module assembly can be more easily controlled. In particular, the fire extinguishing agent discharged from the fire-fighting tank 400 can easily move downward by gravity. Therefore, heat and fire in the cell module assembly can be more easily suppressed by the fire extinguishing agent.

In particular, in case where the cell module assembly includes a plurality of battery cells 110 arranged horizontally, that is, in the left-right direction, as shown in Fig. 1, if the fire extinguishing agent is discharged from the fire-fighting tank 400 located at the upper part, the fire extinguishing agent can be easily supplied to the entire battery cells 110. Therefore, according to such embodiments, thermal event suppression for the entire cell module assembly can be achieved more effectively.

The blocking member 200 may be configured in a form in which a heat insulating material is interposed between metal plates as shown in Fig. 3.

Here, the metal plate may be made of an aluminum material. That is, the metal plate may be an aluminum plate.

Also, the heat insulating material may be a mica sheet or a compression paper (plate).

According to such a configuration of embodiment, the blocking member 200 can serve as thermal spreading and cooling to further improve heat/flame blocking effects between cells.

The fire-fighting tank 400 may be configured so as to discharge the fire extinguishing agent toward the cell module assembly, when heat is applied from the cell module assembly. In particular, the fire-fighting tank 400 may be configured such that at least a portion thereof is melted by heat applied from the cell assembly. Further, the fire-fighting tank 400 may be configured so as to be melted by a venting gas ejected from the battery cell 110 or the temperature of the battery cell 110.

In addition, the fire-fighting tank 400 can store a fire extinguishing agent in a liquid state. For example, the fire-fighting tank 400 can store water, salt water, cooling water, insulating oil, and the like as fire extinguishing agents.

Further, the fire-fighting tank 400 may be configured such that the thickness of the base plate is different for each position. Further, the fire-fighting tank 400 may be located at a central portion between cells in which fragile parts having relatively thin thicknesses are stacked in a horizontal direction.

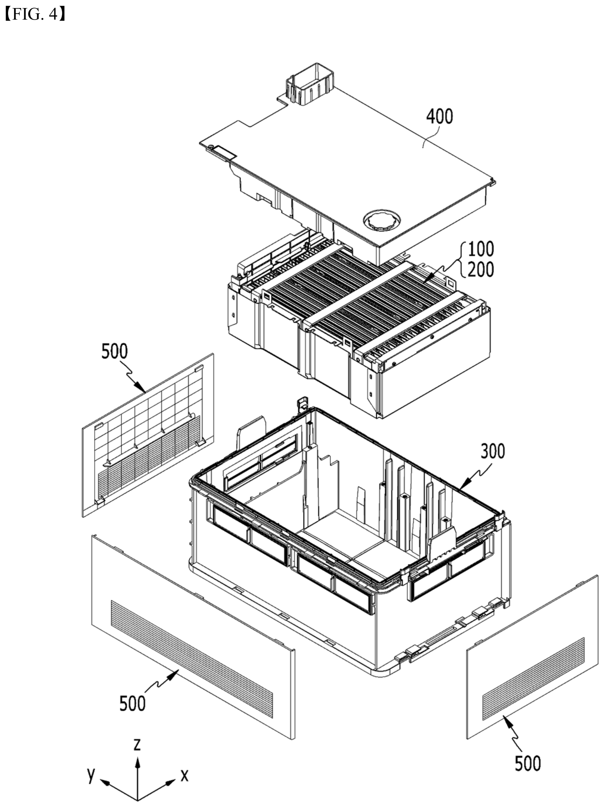

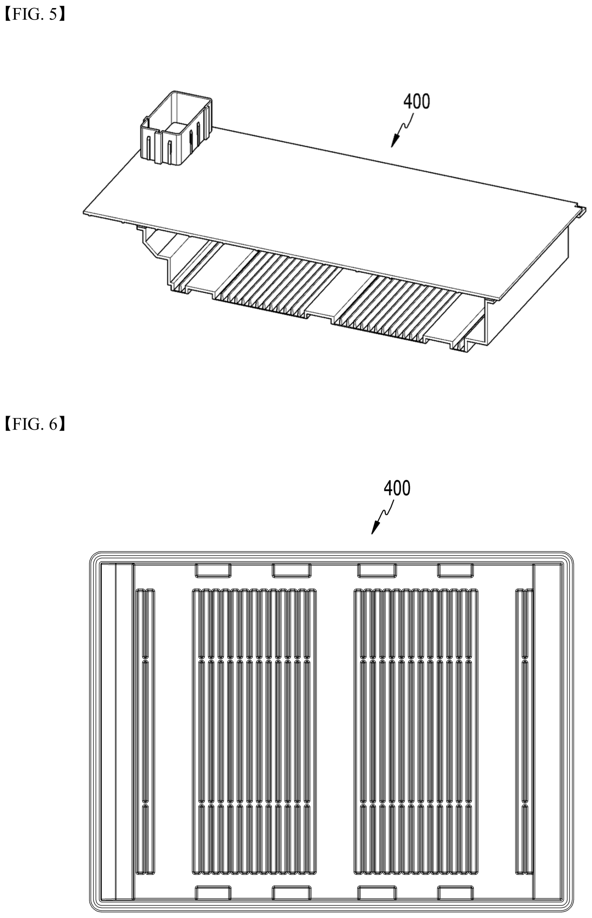

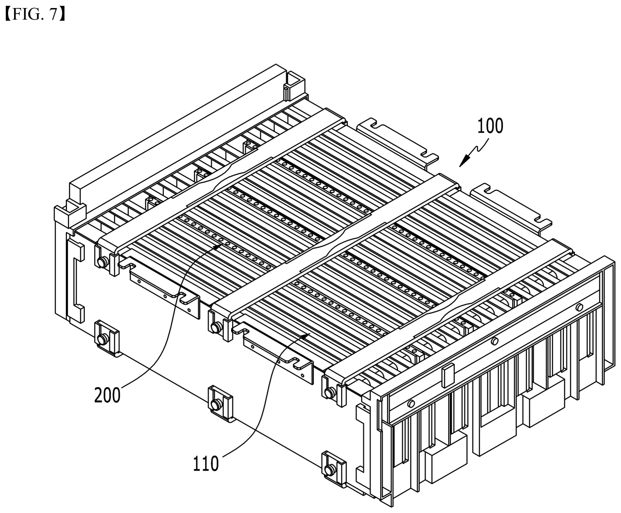

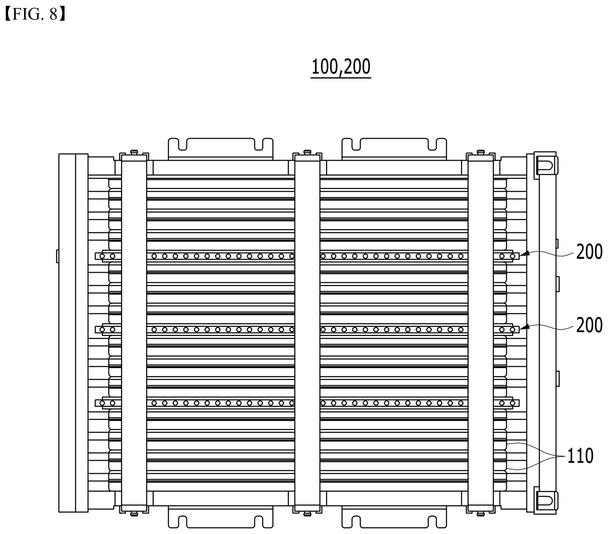

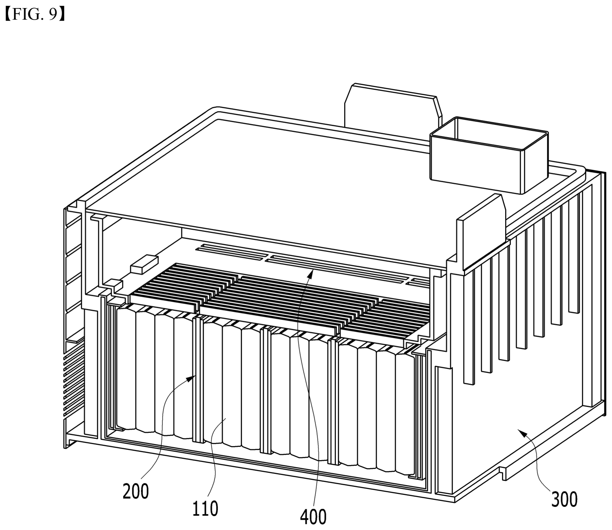

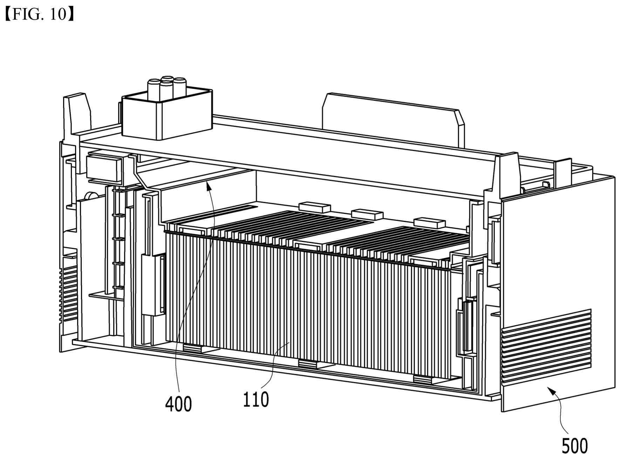

Fig. 4 is an exploded perspective view which schematically shows the configuration of a battery pack according to another embodiment of the present disclosure. Fig. 5 is a cross-sectional view which shows the configuration of a fire-fighting tank included in the battery pack of Fig. 4. Fig. 6 is a top view which shows the configuration of a fire-fighting tank included in the battery pack of Fig. 4. Further, Figs. 7 and 8 are a perspective view and a top view which show the configuration of a cell module assembly included in the battery pack of Fig. 4. Further, Figs. 9 and 10 are cross-sectional views of battery packs according to other embodiments of the present disclosure.

Referring to Figs. 4 to 10, the fire-fighting tank 400 may be disposed in the upper part of the cell module assembly including the battery cell 110 and the blocking member 200. In particular, the blocking member 200 may comprise an insulating pad and a swelling pad as shown in Fig. 8.

In addition, the upper fire-fighting tank 400 and the battery cell 110 may be positioned orthogonally as shown in Fig. 9. Therefore, even if an event such as venting gas or spark occurs in any part of the battery cell 110, a fire extinguishing agent (e.g., coolant) can be easily injected.

In addition, the blocking member 200 may be configured to allow the fire extinguishing agent discharged from the fire-fighting tank 400 to flow thereinto. For example, when water is discharged from the fire-fighting tank 400, the discharged water may flow into the blocking member 200. At this time, the blocking member 200 may possess a space capable of injecting a fire extinguishing fluid therein, or may comprise a material capable of absorbing the fire extinguishing fluid. In addition, the blocking member 200 may be configured in various shapes into which fire extinguishing fluid may flow.

For example, as shown in Fig. 10, the blocking member 200 may be configured such that when the event occurs, an upper fire extinguishing agent (e.g., coolant) fills the gap of the insulating pad to maximize insulation performance.

According to such a configuration of embodiment of the present disclosure, the effect of preventing heat/flame propagation between cells by the blocking member 200 can be further increased.

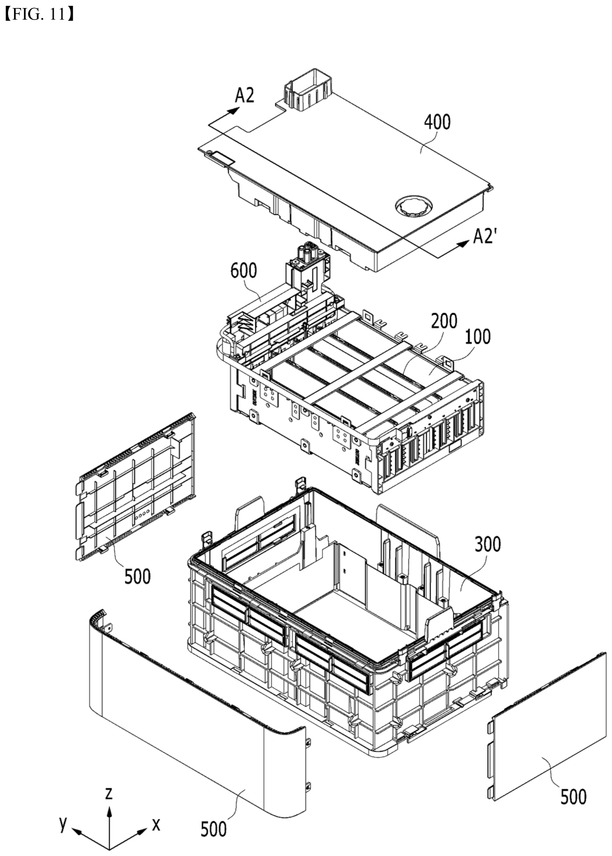

Fig. 11 is an exploded perspective view which schematically shows the configuration of a battery pack according to yet another embodiment of the present disclosure.

Referring to Fig. 11, the battery pack includes a cell module assembly 100, a blocking member 200, a pack case 300, a fire-fighting tank 400, an outer cover 500, and an electrical connection unit 600.

Even in Fig. 11, the cell module assembly 100 may be configured such that each of the plurality of battery cells 110 is stacked in a form arranged along a horizontal direction (e.g., X-axis direction in the figure) in a state of being erected in the vertical direction (e.g., the Z-axis direction in the figure). At this time, the longitudinal direction of the battery cell 110 is, for example, the Y-axis direction in the figure.

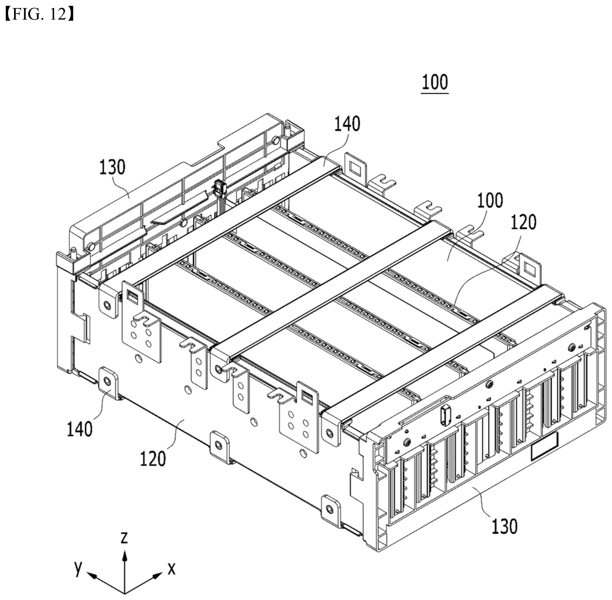

Fig. 12 is a perspective view of a cell module assembly 100 included in the battery pack of Fig. 11.

For reference, in order to more clearly show the components included in the cell module assembly 100, Fig. 12 shows the remaining components except for the plurality of battery cells 110. The plurality of battery cells 110 may be conventional pouch-type battery cells or prismatic battery cells.

Referring to Fig. 12, a pair of busbar housings 130 are disposed on front and rear surfaces of a stack of the plurality of battery cells 110. Each of the busbar housings 130 is disposed in a direction orthogonal to the longitudinal direction of the battery cell 110 (e.g., the X-axis direction in the figure).

A pair of end plates 120 are respectively provided at the both side ends of the stack of the plurality of battery cells 110. The end plate 120 is disposed in parallel with the battery cells 110. A pair of end plates 120 are connected between the pair of busbar housings 130, respectively.

Each of the upper and lower sides between the pair of end plates 120 may include at least one strap 140 that connects between the pair of end plates 120. The strap 140 strengthens the binding of the cell module assembly 100. More specifically, it strengthens the binding of the pair of end plates 120 and the stack of the plurality of battery cells 110 disposed therebetween. Thereby, it is possible to prevent the stack of battery cells 110 from being misaligned.

In addition, the description concerning the cell module assembly 100 overlaps with those described in Fig. 1, and thus, for details, refer to those described above in relation to Fig. 1.

Meanwhile, as shown in Fig. 11, a plurality of battery cells 110 may be grouped and housed into a predetermined number. Moreover, as shown in Figs. 11 to 17, a blocking member 200 is provided between a group of a plurality (predetermined number) of battery cells 110 and a group of a plurality (predetermined number) of adjacent battery cells 110.

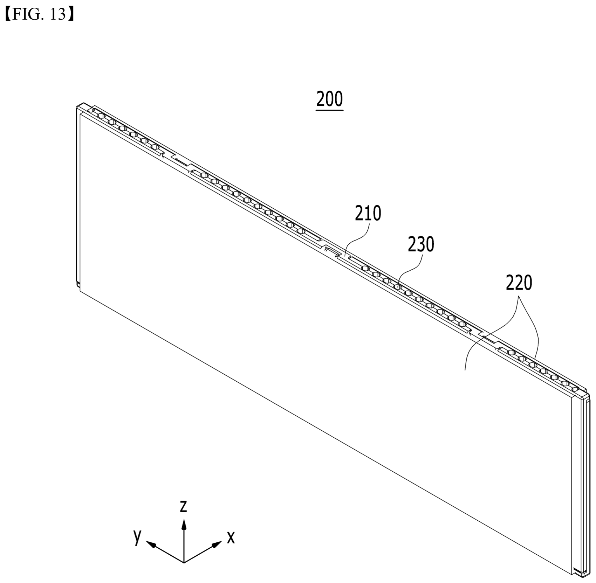

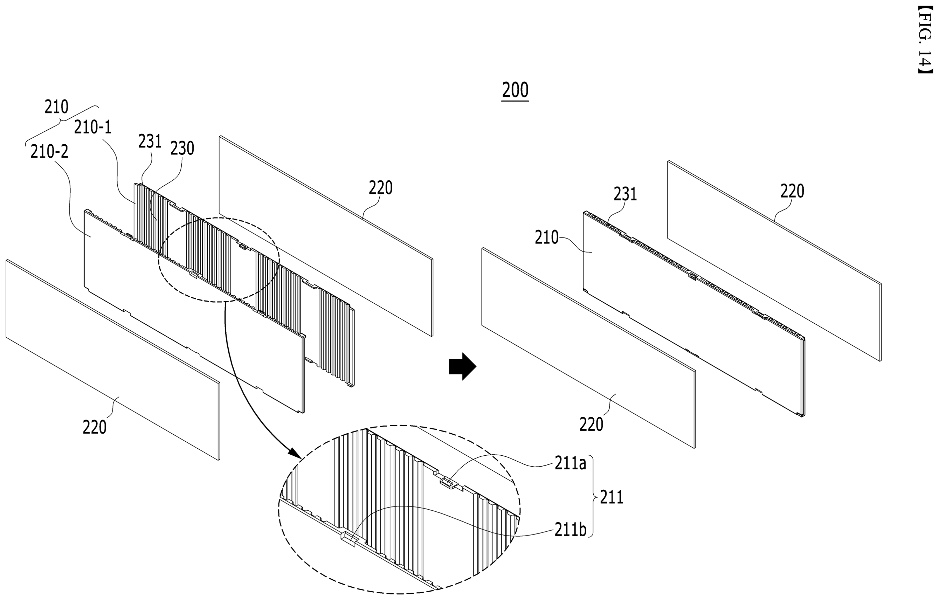

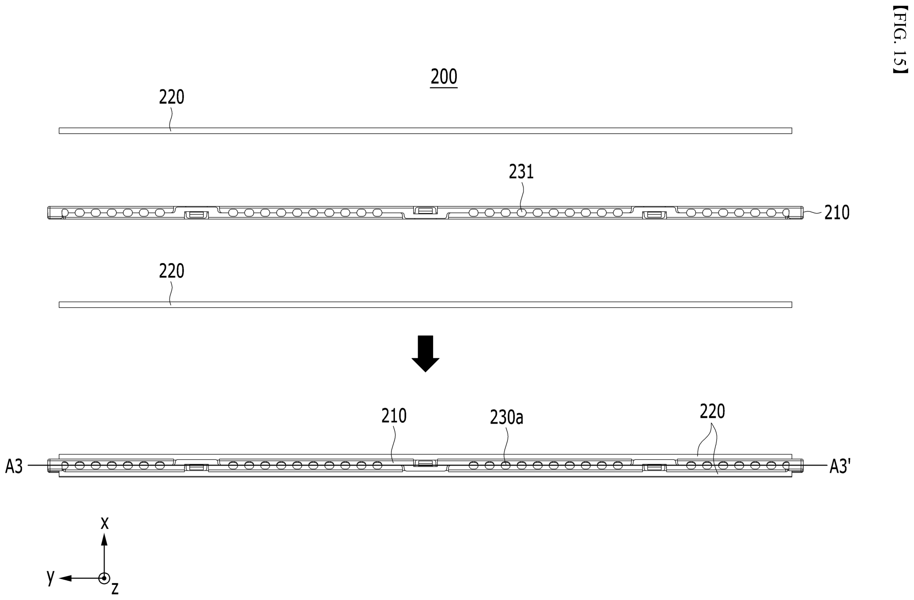

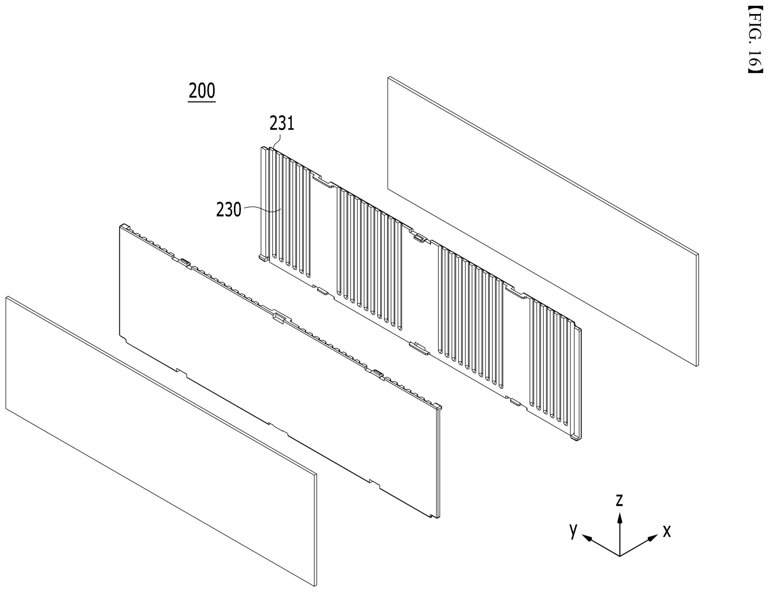

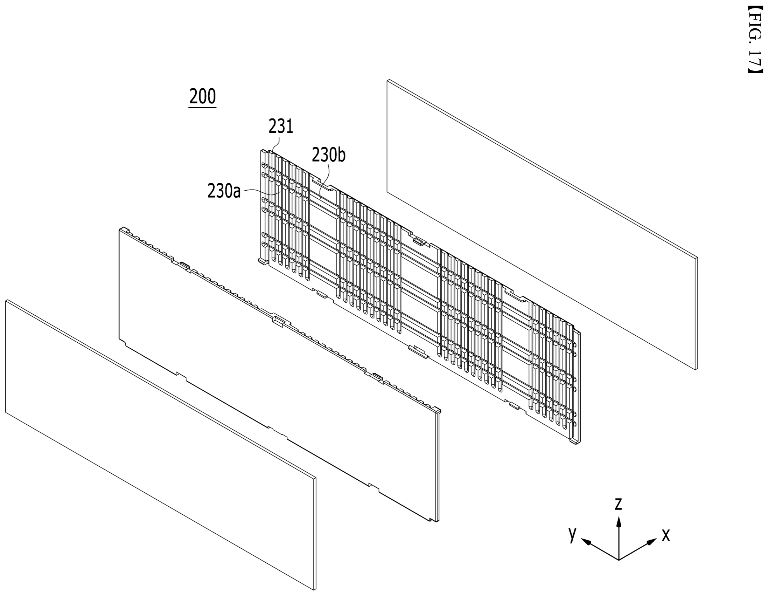

Fig. 13 is a perspective view of a blocking member 200 included in the battery pack of Fig. 11. Fig. 14 is an exploded perspective view of the blocking member 200 of Fig. 13. Fig. 15 is a top view of the blocking member 200 of Fig. 13. Figs. 16 and 17 each show modifications of the blocking member 200 of Fig. 13. The cross-sectional view is a cross-sectional view taken along line A3-A3' in Fig. 15.

The blocking member 200 may be configured to be interposed between adjacent battery cells 110 to block heat. For example, when a thermal event occurs in some of the battery cells 110 to generate heat or a high-temperature venting gas, the generated heat or gas may be suppressed or blocked from being transferred to an adjacent battery cell 110 by the blocking member 200. In addition, the blocking member 200 may serve to block flames or sparks ejected from a specific battery cell 110.

The blocking member 200 has a substantially plate-like shape. The blocking member 200 may be configured in a plate-like shape erected in the vertical direction. Moreover, the blocking member 200 may also have the height equal to or similar to that of the battery cell 110 erected in the vertical direction. The height of the blocking member 200 may be smaller or larger than the height of the battery cell 110.

A plurality of blocking members 200 may be included in accordance with the number of battery cells. And, as described above, the blocking member 200 may constitute the cell module assembly 100 in a stacked form together with the battery cells 110.

According to such a configuration of embodiment of the present disclosure, in a battery pack including a plurality of battery cells 110, thermal runaway propagation between cells or the like can be effectively prevented by the blocking member 200.

Also, the blocking member 200 may be largely formed of a triple structure. For example, a pair of swelling pads 220 are provided on each of the both surfaces of the support plate 210. The support plate 210 maintains the shape and stiffness of the blocking member 200 and blocks flames or sparks ejected from the battery cells 110 between the battery cells 110. The support plate 210 may be made of, for example, metal or stainless steel. The swelling pad 220 reduces pressure that is applied to the battery cell 110 due to the support plate 210 during swelling of the battery cell 110. The swelling pad 220 may be made of, for example, a silicone material or a soft plastic material.

The length of the swelling pad 220 may be smaller than or equal to the length of the support plate 210. Here, the length means, for example, the Y-axis direction in the figure.

Meanwhile, the blocking member 200 according to the present disclosure includes a plurality of openings 231 at the upper end. In addition, the inside of the blocking member 200 includes an empty space connected to the plurality of openings 231. When a fire extinguishing agent (fire extinguishing fluid) is injected into the cell module assembly 100 from the fire-fighting tank 400 located in the upper of the cell module assembly 100, a fire extinguishing agent (fire extinguishing fluid) enters the empty space inside the blocking member 200 through the plurality of openings 231. That is, as the fire extinguishing agent (fire extinguishing fluid) stays in the empty space inside the blocking member 200, the battery cell 110 in which the thermal event has occurred can be more effectively cooled and extinguished.

Further, the blocking member 200 includes a plurality of through holes 230 arranged in one direction.

In the embodiment according to Figs. 13 to 17, the support plate 210 has a plurality of through holes 230 formed by penetrating the support plate 210 in a vertical direction, that is, in the height direction (e.g., the Z-axis direction in the figure) as shown in detail in Figs. 14 and 15, and the plurality of through holes 230 are disposed along the longitudinal direction of the support plate 210 (e.g., the Y-axis direction in the figure). That is, the uppermost ends of the plurality of through holes 230 become the plurality of openings 231. The inside of the plurality of through holes 230 becomes an empty space inside the blocking member 200.

When a fire extinguishing agent (fire extinguishing fluid) is injected into the cell module assembly 100 from the fire-fighting tank 400 located in the upper part of the cell module assembly 100, the fire extinguishing agent (fire extinguishing fluid) enters even into the plurality of through holes 230. That is, as the fire extinguishing agent (fire extinguishing fluid) stays in the plurality of through holes 230, the battery cell 110 in which the thermal event has occurred can be more effectively cooled and extinguished.

As shown in Fig. 14, the plurality of through holes 230 may be formed so as to be opened on both the upper surface and the lower surface of the support plate 210. Alternatively, as shown in Fig. 16, the plurality of through holes 230 is opened only in its upper surface, and the lower surface thereof may have a clogged shape so that the fire extinguishing agent (fire extinguishing fluid) can stay in the through holes 230 longer. When assembling the battery pack, in the former case, if the support plate 210 of the blocking member 200 is disposed so as to be closely contacted or adhered to the inner lower surface of the pack case 300, the fire extinguishing agent (fire extinguishing fluid) may stay in the through hole 230 longer as in the latter case.

Meanwhile, when manufacturing the blocking member 200, as shown in the left figure of Fig. 14, the support plate 210 can be manufactured by a method of coupling a pair of support plate members 210-1 and 210-2. At this time, the pair of support plate members 210-1 and 210-2 are formed by coupling a pair of support plate members 210-1 and 210-2 that are bilaterally symmetrically formed at a cross section in a longitudinal direction of the support plate 210. Alternatively, the support plate 210 can be integrally molded and manufactured from the beginning, as shown in the right figure in Fig. 14.

As shown in the left figure in Fig. 14, when a pair of support plate members 210-1 and 210-2 are manufactured and coupled, it may be easy to form a plurality of through holes 230. A support plate fastening member 211 may be further included so as to more firmly couple the pair of support plate members 210-1 and 210-2. The support plate fastening member 211 may include a female support plate fastening member 211a and a male support plate fastening member 211b. However, the present disclosure is not limited to those shown in the figure, and a shape capable of coupling a pair of support plate members 210-1 and 210-2 is sufficient.

Fig. 17 shows a case in which a plurality of through holes 230 are not formed in one direction but are formed in two directions and intersect each other.

For example, one embodiment of Fig. 17 shows the case in which a plurality of first through holes 230a extending in a first direction and a plurality of second through holes 230b extending in a second direction are intersected orthogonally. The plurality of first through holes 230a are formed in the first direction (an up and down direction, that is, a height direction (e.g., Z-axis direction in the figure) of the support plate 210. The plurality of first through holes 230b are formed in the second direction (longitudinal direction (e.g., Y-axis direction in the figure)) of the support plate 210. When a thermal event occurs in the battery cell 110, the fire extinguishing agent (fire extinguishing fluid) injected from the fire-fighting tank 400 flows into the plurality of first through holes 230a of the support plate 210, and then flows into the plurality of second through holes 230b intersecting therewith.

The plurality of second through holes 230b may not penetrate up to both side surfaces of the support plate 210. That is, both ends of the plurality of second through holes 230b are spaced apart from both side surfaces of the support plate 210 by a predetermined distance, and both ends of the plurality of second through holes 230b may be clogged. Thereby, the fire extinguishing agent (fire extinguishing fluid) flowing into the plurality of second through holes 230b may not escape to both side surfaces of the support plate 210 but stay in the through holes 230. Alternatively, there may be cases in which the plurality of second through holes 230b penetrate up to both side surfaces of the support plate 210. In order to prevent the fire extinguishing agent (fire extinguishing fluid) flowing into the plurality of second through holes 230b from escaping to both sides of the support plate 210, both side surfaces of the support plate 210 may be assembled so as to be closely contacted or adhered to the busbar housing 130 shown in Fig. 12.

A modification of Fig. 17 is realized, for example, by the case where the plurality of first through holes 230a extending in the first direction and the plurality of second through holes 230b extending in the second direction orthogonally intersect each other, so that the plurality of first through holes 230a and the plurality of second through holes 230b are extended in an oblique line direction of the support plate 210 (for example, an angle inclined at 45 degrees relative to the upper end of the blocking member 200).

Meanwhile, the present disclosure is not limited to those shown in the figure, and various modifications and changes can be made, for example, such as a case where a plurality of through holes 230 are formed in three directions and intersect each other.

In summary, the blocking member 200 according to the present disclosure commonly has an opening at an upper end of the blocking member 200. When a thermal event occurs in the battery cell 110, the fire extinguishing agent (fire extinguishing fluid) in the fire-fighting tank 400 located above the cell module assembly 100 passes through the opening located at the uppermost end of the blocking member 200 through a plurality of through holes 230, and can stay in the inner space of the support plate 210 longer. Thereby, the fire extinguishing agent (fire extinguishing fluid) can stay between the battery cells 110 longer, and the battery cells 110 can be cooled or extinguished more effectively.

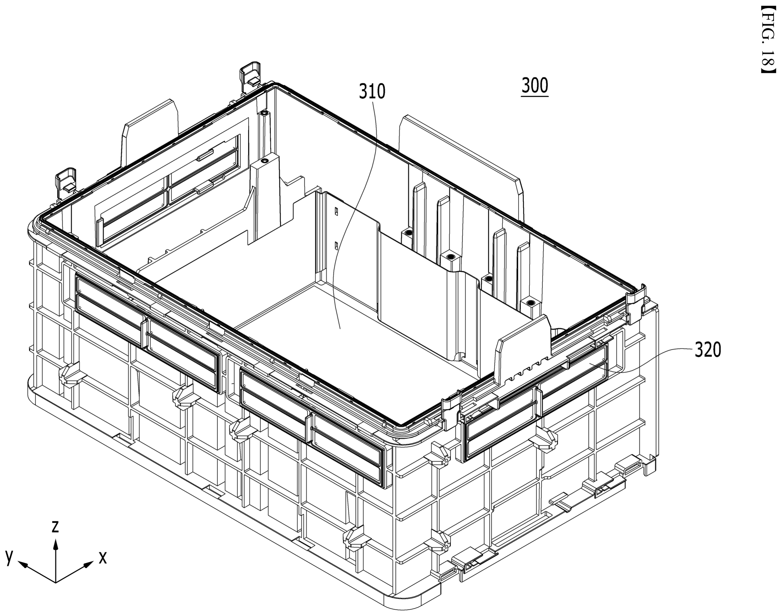

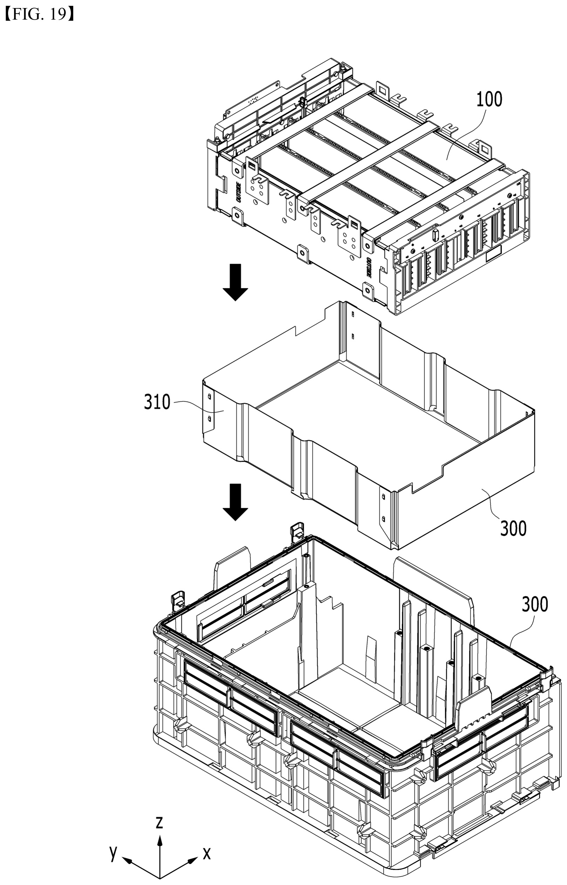

Fig. 18 is a perspective view of a pack case 300 included in the battery pack of Fig. 11. Fig. 19 is a diagram which explains a case where the cell module assembly 100 of Fig. 18 is housed in a pack case 300.

Referring to Fig. 18, the pack case 300 may be configured in a box shape. The box-shaped pack case 300 may be integrally molded, or may be manufactured in such a way that at least one surface couples with an adjacent surface.

The pack case 300 includes at least one venting hole 320. A filter is mounted on the venting hole 320.

When a thermal event occurs in the battery cell 110 housed inside the pack case 300, venting gas generated from the corresponding battery cell 110 may be discharged through the venting hole 320. The venting gas discharged from the venting hole 320 may pass through a space between the pack case 300 and the outer cover 500 (see Fig. 11) and be discharged to the outside of the outer cover 500.

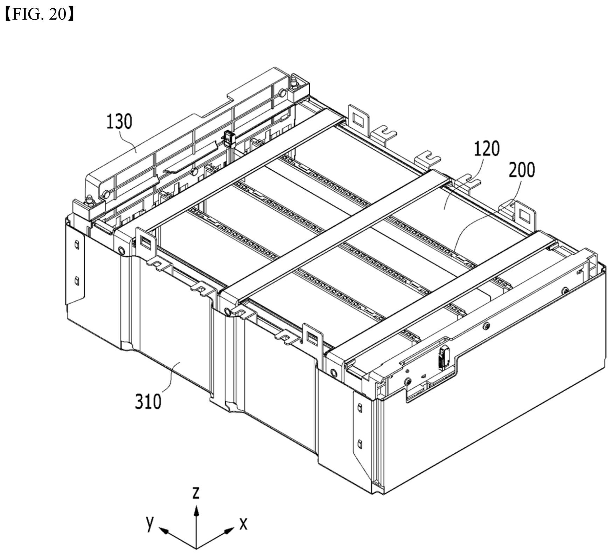

Meanwhile, as shown in Figs. 19 and 20, the cell module assembly 100 shown in Fig. 12 may be housed in the inner space of the auxiliary case 310 and then mounted on the pack case 300. The cell module assembly 100 is primarily housed in the inner space of the auxiliary case 310 and then finally housed in the pack case 300, thereby being able to supplement the stiffness of the cell module assembly 100 and prevent misalignment of the stack of the plurality of battery cells 110 in the cell module assembly 100. The auxiliary case 310 may be made of, for example, metal, stainless steel, or the like

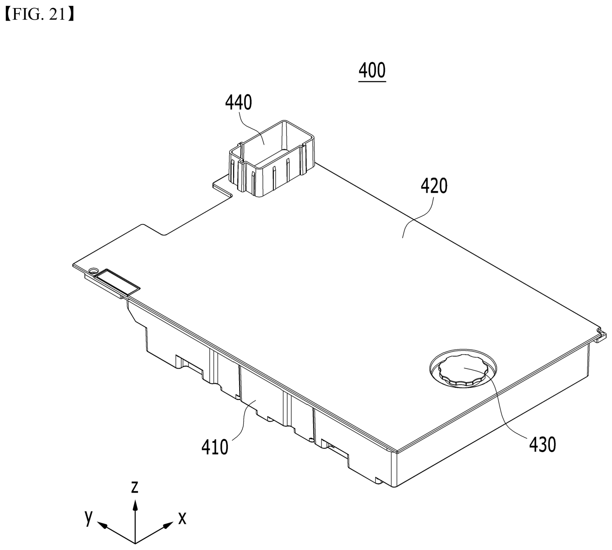

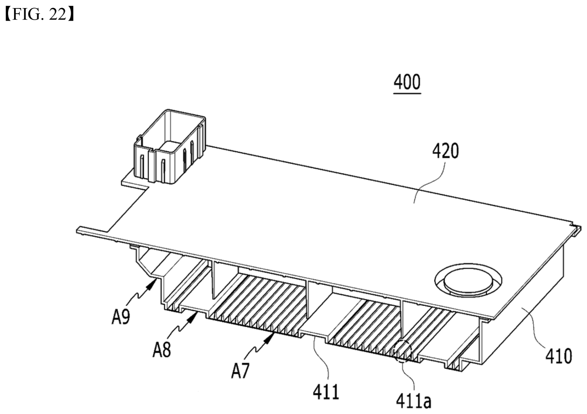

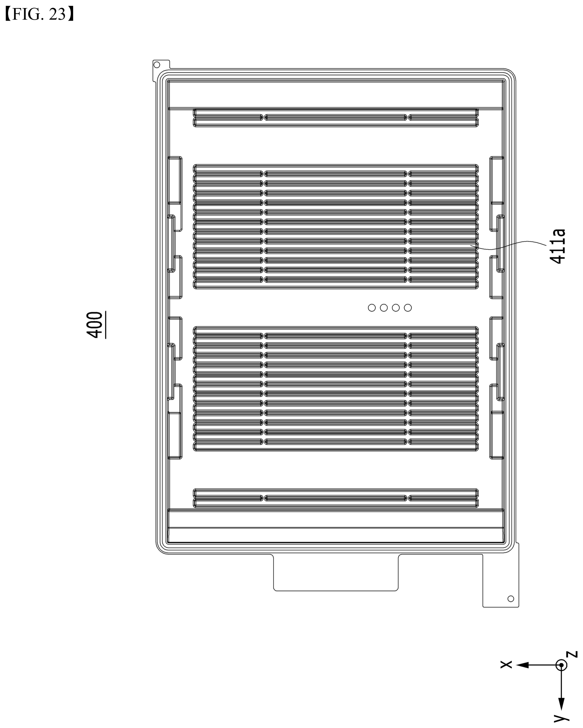

Fig. 21 is a perspective view of a fire-fighting tank 400 included in the battery pack of Fig. 11. Fig. 22 is a perspective cross-sectional view of the fire-fighting tank 400 of Fig. 21, and shows a cross section taken along line A1-A1' in Fig. 11. Fig. 23 is a top sectional view of the lower coolant tank 410 of the fire-fighting tank 400 as viewed from above;

As described above in Fig. 1, the fire-fighting tank 400 includes a lower coolant tank 410 and an upper coolant tank cover 420. The lower coolant tank 410 and the upper coolant tank cover 420 may be separately manufactured, and hermetically coupled, or may be integrally manufactured. The upper coolant tank cover 420 may further include an inlet port 430 capable of injecting a fire extinguishing agent. The inlet port 430 may be closed with a stopper to seal the fire-fighting tank 400.

A portion of the base plate 411 of the lower coolant tank 410 where the thickness is thinly formed can function as a fragile part 411a. That is, when a thermal event occurs in the battery cell 110 of the cell module assembly 100, this fragile part 411a where the thickness is relatively thin may be broken first. When the fragile part 411a is broken to form an opening in a base plate 411, the fire extinguishing agent stored inside the fire-fighting tank 400 may be discharged toward the cell module assembly 100 through the corresponding fragile part 411a.

A plurality of fragile parts 411a may be provided. The fragile part 411a may have, for example, a shape in which the width is narrow and the length is long. That is, it may have a linear shape, which is a straight-line shape arranged in parallel to one end of the fire-fighting tank 400, and the fragile parts 411a may be arranged parallel to each other.

Meanwhile, according to the present embodiment, the longitudinal direction of the battery cell 110 (e.g., the X-axis direction in the figure) and the longitudinal direction of the fragile part 411a (e.g., the X-axis direction in the figure) may be orthogonal to each other. That is, the plurality of fragile parts 411a are disposed to intersect the longitudinal direction of the corresponding battery cell 110. Thereby, along the longitudinal direction of the battery cell 110 where the thermal event has occurred, the fire extinguishing agent can be supplied all at once through the plurality of opened fragile parts 411a throughout the battery cell 110, and the battery cell 110 in which the thermal event has occurred can be more efficiently and quickly extinguished.

Further, referring to Fig. 22, the base plate 411 of the lower coolant tank 410 has a step difference. More specifically, the base plate 411 is largely classified as follows. It consists of a part A7 where the fragile part 411a is located, a part A8 that abuts on the strap 140 of the pack case 300, and a part A9 located on the side of the electrical connection unit 600. Among them, the height of the base plate 411 at the part A7 where the fragile part 411a is located is the lowest.

The fragile part 411a of the lower coolant tank 410 is arranged most adjacently to the battery cell 110 as much as possible. Thereby, when overheating or ignition situation has occurred in some battery cells 110, it is possible to perform prompt initial suppression, thereby more effectively preventing the occurrence of a dangerous situation such as a secondary explosion due to the transfer of heat or flame to adjacent battery cells110.

In other words, as shown in Fig. 12 with respect to the cell module assembly 100, the height of the cell module assembly 100 is not constant due to the portion where the strap 140 is located or the portion where the busbar housing 130 is located, or the like. Regardless of this, if the height of the base plate 411 of the lower coolant tank 410 of the fire-fighting tank 400 is constant as a whole, an empty space is relatively created between the base plate 411 of the fire-fighting tank 400 and the upper surface of the cell module assembly 100. In such a case, heat transfer from the battery cell 110 whose temperature has risen to the fragile part 411a is hindered by the empty space, so that the fire extinguishment is delayed with just that.

When the battery cell 110 overheats, the fragile part 411a is disposed in close proximity to the battery cell 110 whose temperature has risen, so that the fragile part 411a is immediately broken, and the battery cell 110 can be quickly cooled and extinguished.

In summary, the lower surface of the base plate 411 of the fire-fighting tank 400 and the upper surface of the cell module assembly 100 have shapes that generally match with each other. Thereby, since the fire-fighting tank 400 is arranged in closer contact with the cell module assembly 100, thereby capable of more effectively cooling the battery cell 110 with a temperature rise, and more quickly injecting a fire extinguishing agent into the battery cell 110 where overheating or ignition occurs. In addition, it is possible to efficiently house fire extinguishing agents in the fire-fighting tank 400. That is, if the height of the base plate 411 of the lower coolant tank 410 of the fire-fighting tank 400 is constant as a whole, the fire tank 400 houses a fire extinguishing agent as little as the corresponding empty space.

The fire extinguishing agent provided in the fire-fighting tank 400 may be, for example, in the form of fire extinguishing fluid, and redundant descriptions are omitted. For details, refer to those described above.

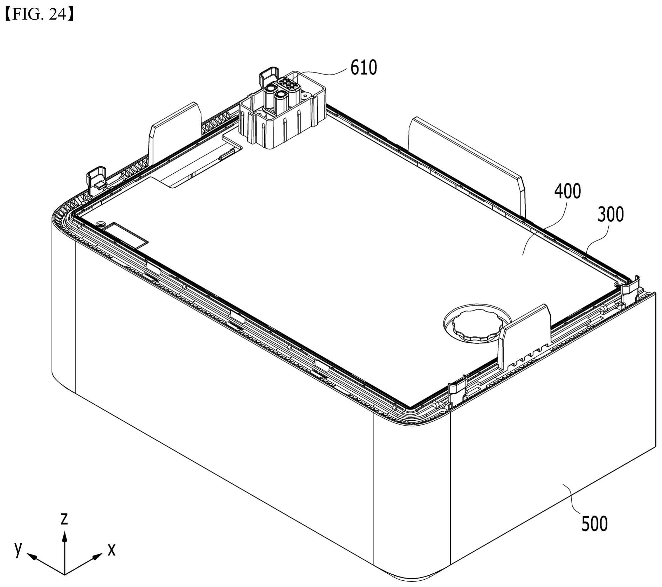

Fig. 24 is a perspective view of a battery pack in which all components of the battery pack described above with reference to Figs. 11 to 23 are combined.

In addition, for parts where the description concerning the battery pack of Figs. 11 to 24 overlaps with the description concerning the battery pack of Figs. 1 to 10, refer to those described above in Figs. 1 to 10.

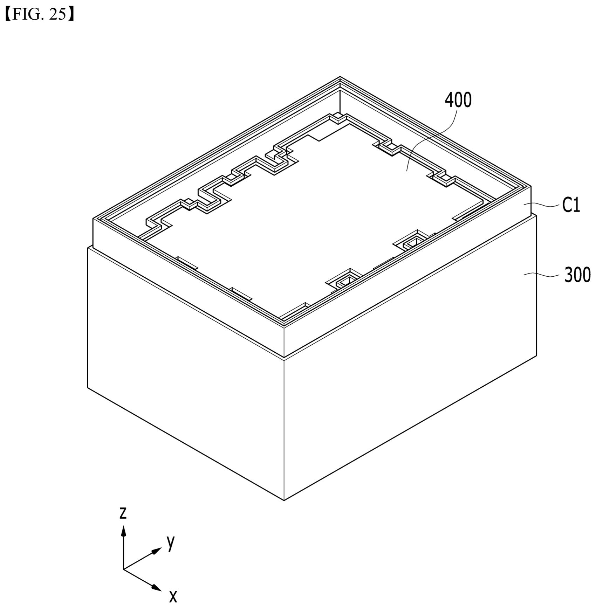

Meanwhile, a plurality of the pack cases 300 may be provided, and configured to be stacked in the vertical direction. This will be described in more detail with reference to Fig. 25.

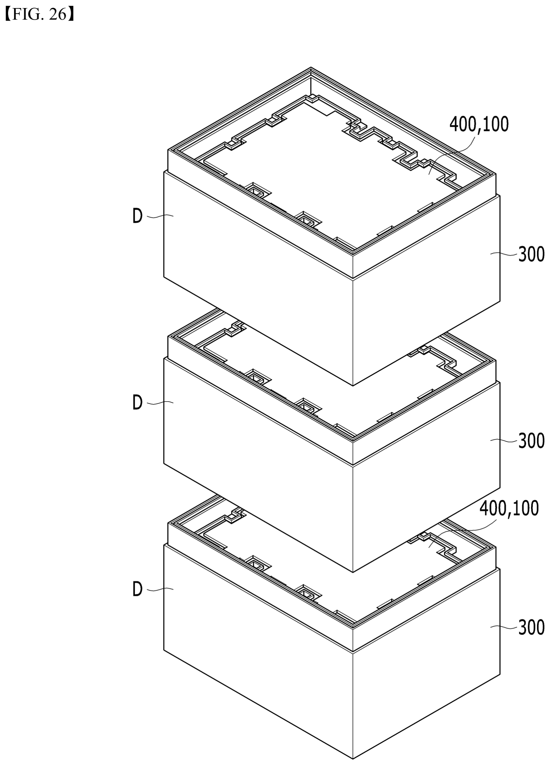

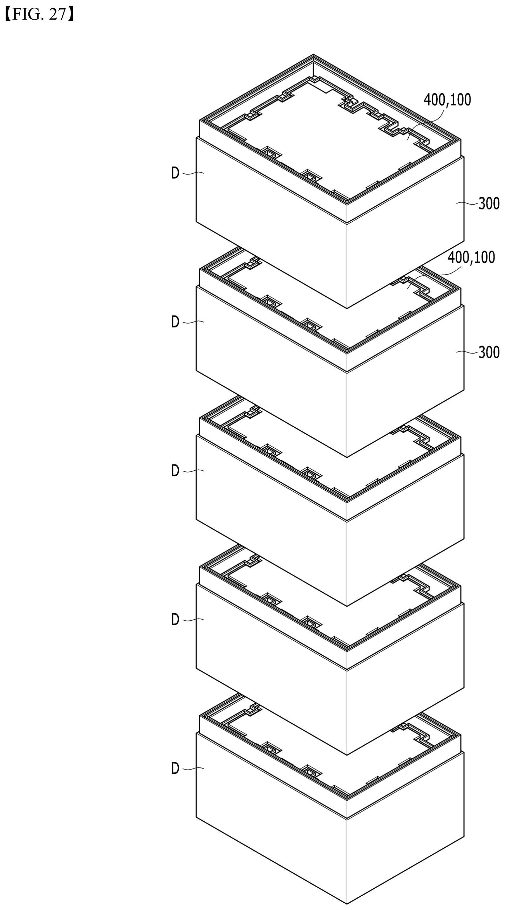

Fig. 25 is a perspective view which schematically shows at least a part of the configuration of the battery pack of Figs. 1 to 24 of the present disclosure. Also, Figs. 26 and 27 are diagrams showing an embodiment in which a plurality of pack cases 300 shown in Fig. 25 are stacked.

Referring to Fig. 25, the pack case 300 may include a bottom part and a side wall part. The cell module assembly 100 can be housed in the inner space of the pack case 300, and the upper surface of the cell module assembly 100 is covered with the fire-fighting tank 400 to form a battery pack. For reference, in Fig. 25, the height of the upper side of the pack case 300 is shown to be greater than the height of the upper surface of the fire-fighting tank 400. However, Fig. 25 is merely a schematic diagram and one exemplary embodiment, and the present disclosure is not limited to those shown in Fig. 25. That is, conversely, various modifications and changes can be made, for example, the height of the upper surface of the fire-fighting tank 400 may be greater than the height of the upper side of the pack case 300, and the height of the upper surface of the fire-fighting tank 400 and the height of the upper side of the pack case 300 may be equal.

The pack case 300 as shown in Fig. 25 may be formed by a plurality of numbers, so that a stacked structure of battery packs can be formed as shown in Fig. 26 or 27. At this time, the battery pack of Fig. 25 may be one unit pack. In addition, as such unit packs are formed by a plurality of numbers, an entire battery pack of module stacking type as shown in Fig. 26 or 27 may be configured.

More specifically, for example, in the configuration of Fig. 26, a shape in which three unit packs D are stacked in the vertical direction is illustrated. And, in the configuration of Fig. 27, a shape in which five unit packs D are stacked in the vertical direction is illustrated. The present disclosure is not limited to those illustrated, and may be realized by changing the number of unit packs D in various ways to suit the environment in which the invention is realized.

For example, if the battery pack of the present disclosure is realized as an energy storage system (ESS), the number of unit battery packs is adjusted, so that a voltage range and/or electric storage capacity of the energy storage system can be realized to suit its environment.

According to such a configuration of embodiment of the present disclosure, a single unit pack having a common structure is stacked in various ways, which makes it possible to cope with products of various voltage ranges and/or electric storage capacity in accordance with the stacking number. For example, by adjusting the stacking number of the same unit pack, low-pressure products as shown in Fig. 26, or high-voltage products as shown in Fig. 27 can be realized. Therefore, it is possible to improve economic efficiency or compatibility compared to products limited only to the standard of a specific voltage range. In addition, according to such a configuration of embodiment, products with various capacities can be realized.

In other words, if the unit packs to be stacked are connected in series, products of various voltage ranges can be realized according to the stacking number. Further, when the unit packs to be stacked are connected in parallel, products with various capacities (electric storage capacities) can be realized according to the stacking number.

In particular, each unit pack D may have a cell module assembly 100 therein. In addition, each unit pack D includes a connector 610 so as to electrically connect each cell module assembly 100 to each other during stacking, as described above. In particular, these connectors 610 may be configured to be coupled to each other due to the upper and lower stacking of each unit pack D.

Moreover, in such a configuration of embodiment, the fire-fighting tank 400 may be housed together with the cell module assembly 100 in each unit pack D. That is, each unit pack D includes the fire-fighting tank 400 on the upper part of the cell module assembly 100 as described above. The plurality of stacked battery packs have a stacked structure of fire-fighting tank 400 - cell module assembly 100 - fire-fighting tank 400 - cell module assembly 100 from top to bottom. The stacked battery pack of the present disclosure having such a structure allows the battery pack to be configured by increasing (extending) the number of cell module assemblies 100 in order to increase various voltage ranges and/or electric storage capacities, and also can safely cope with thermal event such as fire of the cell module assembly 100. Therefore, according to this embodiment of the present disclosure, the safety of the battery pack can be further improved.

In another example of a coupling method between vertically stacked battery packs (pack case 300), referring to Fig. 25 again, details are as follows. At the upper end of the side wall part of the pack case 300, there may be a step difference formed concavely inward, such as the step part C1 for coupling. For example, the thickness of the side wall part of the pack case 300 becomes a thin part. In addition, although not shown in Fig. 25, a concave part for coupling may be formed at the bottom part of the pack case 300 so that the step part C1 for coupling of the side wall part is inserted. That is, when stacking mutually different pack cases 300 in the vertical direction, the pack case 300 may be configured such that the coupling step part C1 formed on the upper side of the side wall part of the lower layer pack case 300 is inserted into the coupling concave part formed on the bottom part of the upper layer pack case 300. Thereby, when the plurality of pack cases 300 are stacked and coupled in the vertical direction, the outer surface of the pack case 300 may have a flat shape as a whole.

Meanwhile, a coupling method for a fastening structure between vertically stacked battery packs is not limited to those shown in Figs. 25 and/or 18, and other various coupling methods can be modified or changed, and thus applied to the present disclosure.

In addition, the battery packs of the present disclosure can be connected to a battery management system (BMS, not shown). The battery management system monitors and manages the battery pack(s). The battery management system may be located on the uppermost layer of the battery packs stacked vertically. However, the location of the battery management system is not limited to the above, and can be variously modified or changed according to the method or environment in which the invention is realized.

The battery pack according to the present disclosure may further include various other components included in the battery pack in addition to the above-described components. For example, the battery pack according to the present disclosure may include various electrical components for controlling or managing charge and discharge of the battery pack, such as a battery management system (BMS), a relay, a fuse, and a current sensor.

A battery pack according to the present disclosure may be a home battery pack. However, the present disclosure is not necessarily limited to this form of battery pack.

An energy storage system according to the present disclosure includes one or more battery packs according to the present disclosure as described above. In addition, the energy storage system according to the present disclosure may further include general components included in the energy storage system in addition to the battery pack.

Meanwhile, the terms representing directions such as the front side, the rear side, the left side, the right side, the upper side, and the lower side have been used in embodiments of the present disclosure, but it is obvious to those skilled in the art that the terms used are provided simply for convenience of description and may become different according to the position of an object, the position of an observer, or the like.

While the present disclosure has been particularly shown and described with reference to exemplary embodiments and the accompanying drawings, it will be understood by those skilled in the art that various modifications and variations can be made therein without departing from the spirit and scope of the invention as defined by the appended items.

### [Description of Reference Numerals]

100: cell module assembly
110: battery cell
120: end plate
130: busbar housing
140: strap
200: blocking member
210: support plate
210-1, 210-2: a pair of support plate members
220: swelling pad
230: through hole
230a: first through hole
230b: second through hole
300: pack case
300a: lower case
300b: upper case
310: auxiliary case
320: venting hole
400: fire-fighting tank
410: lower coolant tank
411: base plate
411a: fragile part
412: side wall
420: upper coolant tank cover
430: inlet port
500: outer cover
600: electrical connection unit
610: connector

Preferred embodiments of the Invention are specified in the following items:

### [Item 1]

A battery pack comprising:
a cell module assembly including a battery cell stack in which a plurality of battery cells are stacked and each battery cell is erected in a vertical direction;
a plate-shaped blocking members disposed between adjacent battery cells and erected in a vertical direction;
a pack case housing the cell module assembly, an upper surface of the pack case being opened; and
a fire-fighting tank located above the cell module assembly and covering the upper surface of the pack case,
wherein the blocking member includes a plurality of openings at its upper end, and an inside of the blocking member includes an empty space connected to the plurality of openings.

### [Item 2]

The battery pack of item 1, wherein:
when a thermal event occurs in the battery cell, a fire extinguishing agent provided from the fire-fighting tank flows into the empty space inside the blocking member through the plurality of openings of the blocking member.

### [Item 3]

The battery pack of item 1, wherein:
the blocking member comprises a support plate and a pair of swelling pads provided on both surfaces of the support plate.

### [Item 4]

The battery pack of item 3, wherein:
the support plate comprises a plurality of first through holes that are formed by penetrating the support plate in one direction from the plurality of openings, and
an inside of the plurality of first through holes is an empty space inside the blocking member.

### [Item 5]

The battery pack of item 4, wherein:
the first through hole extends in the vertical direction of the support plate, the plurality of first through holes being arranged in a line in parallel to each other.

### [Item 6]

The battery pack of item 4, wherein:
lower ends of the plurality of first through holes are opened at lower ends of the support plate, and
the lower end of the support plate being disposed so as to be closely contacted or adhered to an inner lower surface of the pack case, or the lower ends of the plurality of first through holes have a clogged shape, so that a fire extinguishing agent stays inside the plurality of first through holes.

### [Item 7]

The battery pack of item 4, wherein:
the support plate further comprises a plurality of second through holes,
the plurality of first through holes and the plurality of second through holes extend in mutually different directions and intersect each other, and
an inside of the plurality of first through holes and the plurality of second through holes is the empty space inside the blocking member.

### [Item 8]

The battery pack of item 7, wherein:
both ends of the plurality of second through holes each have a clogged shape.

### [Item 9]

The battery pack of item 7, wherein:
the first through hole extends in the vertical direction of the support plate, the plurality of first through holes being arranged in a line in parallel to each other, and
the second through hole extends in the longitudinal direction of the support plate, the plurality of second through holes being arranged in a line in parallel to each other.

### [Item 10]

The battery pack of item 3, wherein:
the support plate is made of metal or stainless steel, and
the swelling pad is made of a silicone material or a soft plastic material.

### [Item 11]

The battery pack of item 3, wherein:
the support plate is formed by coupling a pair of support plate members that are bilaterally symmetrically formed at a cross section in a longitudinal direction of the support plate.

### [Item 12]

The battery pack of item 3, wherein:
the support plate is integrally formed.

### [Item 13]

The battery pack of item 1, wherein:
the fire extinguishing agent is a liquid fire extinguishing agent.

### [Item 14]

The battery pack of item 1, wherein:
the fire-fighting tank comprises:
an internal space that houses the fire extinguishing agent; and
a plurality of fragile parts where the thickness of a base plate of the fire-fighting tank is relatively thin, so as to be melted and opened by a thermal event of the battery cell.

### [Item 15]

The battery pack of item 14, wherein:
the fragile parts have a linear shape and are arranged in parallel with one edge of the fire-fighting tank, the fragile parts being arranged in parallel with each other, and
a longitudinal direction of the fragile part and a longitudinal direction of the battery cell are orthogonal to each other.

### [Item 16]

The battery pack of item 1, wherein:
the cell module assembly comprises:
a pair of busbar housings disposed on the front and rear surfaces of the battery cell stack; and
a pair of end plates disposed in parallel to the battery cells at both side end parts of the battery cell stack,
wherein a pair of end plates are connected between the pair of busbar housings.

### [Item 17]

The battery pack of item 1, wherein:
a plurality of battery packs are provided and can be stacked in a vertical direction and are coupled to each other through mechanical or electrical connection.

### [Item 18]

An energy storage system comprising the battery pack of item 1.

## Claims

1. A battery pack comprising:
a cell module assembly including a battery cell stack in which a plurality of battery cells are stacked;
a pack case housing the cell module assembly;
a fire-fighting tank located above the cell module assembly; and
a blocking member disposed between adjacent battery cells and erected in a vertical direction,
wherein the blocking member includes a plurality of openings at its upper end, and an inside of the blocking member includes an empty space connected to the plurality of openings.

2. The battery pack of claim 1, wherein:
when a thermal event occurs in the battery cell, a fire extinguishing agent provided from the fire-fighting tank flows into the empty space inside the blocking member through the plurality of openings of the blocking member.

3. The battery pack of claim 1, wherein:
the blocking member comprises a plurality of first through holes that are formed by penetrating the blocking member in a first direction from the plurality of openings, and
an inside of the plurality of first through holes is an empty space inside the blocking member.

4. The battery pack of claim 3, wherein:
the first through hole extends in the vertical direction of the blocking member, the plurality of first through holes being arranged in a line in parallel to each other.

5. The battery pack of claim 3, wherein:
lower ends of the plurality of first through holes are opened at lower ends of the blocking member, and
the lower end of the blocking member being disposed so as to be closely contacted or adhered to an inner lower surface of the pack case, or the lower ends of the plurality of first through holes have a clogged shape, so that a fire extinguishing agent stays inside the plurality of first through holes.

6. The battery pack of claim 3, wherein:
the blocking member further comprises a plurality of second through holes extending in a second direction,
the plurality of first through holes and the plurality of second through holes intersect each other, and
an inside of the plurality of first through holes and the plurality of second through holes is the empty space inside the blocking member.

7. The battery pack of claim 6, wherein:
both ends of the plurality of second through holes each have a clogged shape.

8. The battery pack of claim 6, wherein:
the first through hole extends in the vertical direction of the blocking member, the plurality of first through holes being arranged in a line in parallel to each other, and
the second through hole extends in the longitudinal direction of the blocking member, the plurality of second through holes being arranged in a line in parallel to each other.

9. The battery pack of claim 1, wherein:
the blocking member comprises a support plate and a pair of swelling pads provided on both surfaces of the support plate.

10. The battery pack of claim 9, wherein:
the support plate is made of metal or stainless steel, and
the swelling pad is made of a silicone material or a soft plastic material.

11. The battery pack of claim 1, wherein:
the fire extinguishing agent is a liquid fire extinguishing agent.

12. The battery pack of claim 1, wherein:
the fire-fighting tank comprises:
an internal space that houses the fire extinguishing agent; and
a plurality of fragile parts where the thickness of a base plate of the fire-fighting tank is relatively thin, so as to be melted and opened by a thermal event of the battery cell.

13. The battery pack of claim 12, wherein:
the fragile parts have a linear shape and are arranged in parallel with one edge of the fire-fighting tank, the fragile parts being arranged in parallel with each other.

14. The battery pack of claim 1, wherein:
a plurality of battery packs are provided and can be stacked in a vertical direction and are coupled to each other through mechanical or electrical connection.

15. An energy storage system comprising the battery pack of claim 1.
